# FASCICULE DE BREVET EUROPEEN

(11) **EP 0 588 886 B1**
(45) Date de publication et mention de la délivrance du brevet: **30.08.1995**
(21) Numéro de dépôt: 92912265.3
(22) Date de dépôt: 04.06.1992
(51) Int. Cl.: G01M 1/26, B65C 9/18, B60C 13/00, B44B 5/02, B44B 5/00

(54) **TETE ET DISPOSITIF DE MARQUAGE DE FLANCS DE PNEUMATIQUES ET PROCEDE DE LEUR MISE EN OEUVRE**
KOPF, VORRICHTUNG UND VERFAHREN ZUM MARKIEREN DER SEITENFLANKEN VON REIFEN
HEAD AND DEVICE FOR MARKING THE SIDEWALLS OF TYRES, AND METHOD FOR IMPLEMENTING SAME

(30) Priorité: 10.06.1991 FR 9107113
(43) Date de publication de la demande: 30.03.1994
(73) Titulaire: COMPAGNIE GENERALE DES ETABLISSEMENTS MICHELIN - MICHELIN & CIE, 63040 Clermont-Ferrand Cédex (FR)
(72) Inventeur: JOANNET, Jean-Paul, F-63800 Cournon-d'Auvergne (FR)
(74) Mandataire: Bauvir, Jacques
(86) Numéro de dépôt international: FR9200500
(87) Numéro de publication internationale: WO9222795

(56) Documents cités:
- DE-A- 3 833 711
- FR-A- 2 466 348
- US-A- 3 526 131
- US-A- 3 613 570
- US-A- 4 359 897
- PATENT ABSTRACTS OF JAPAN, vol. 2, no. 66 (M-77) 19 Mai 1978 ; & JP-A-53 030 501
- PATENT ABSTRACTS OF JAPAN, vol. 9, no. 162 (M-394)(1885) 6 Juillet 1985 ; & JP-A-60 036 164

## Description

L'invention concerne un nouveau dispositif de marquage de flancs de pneumatiques destiné à repérer, en sortie de test de contrôle, tout point particulier.

De nombreux procédés de marquage des flancs de pneumatiques ont été développés. Le plus ancien utilise une craie grasse, de façon manuelle ou automatique. Ce procédé a rencontré des problèmes de rupture de la craie en fonction de son degré de séchage et de défauts de marquage sur des flancs lisses.

Un autre procédé de marquage est simplement constitué par des pastilles autocollantes en papier appliquées manuellement ou automatiquement avec un poinçon plat, mais dans ce cas, un problème est lié à la présence sur le flanc des pneumatiques de marquages en relief tels que indices, lettres, marques.... Lorsque le point à repérer se trouve précisément sur une de ces zones en relief, la surface de collage entre la pastille et le flanc peut être fortement réduite, ce qui favorise les décollages ultérieurs.

Les brevets US 3 526 131 et 3 631 716 utilisent des marqueurs projetant ou pulvérisant de l'encre. Ces procédés nécessitent un temps de séchage long, donnent des marques de forme quelconque ou comportant des bavures et pendant le stockage des pneumatiques, des possibilités de transfert entre eux par frottement existent.

Une autre technique de marquage connue est une technique de transfert d'images sous pression telle que décrite par exemple par le brevet français 2 466 348. Les images à imprimer sont préparées par un procédé à écran de soie sur une bande appelée "bande-transfert" puis transférées sur l'objet à imprimer par une application à froid ou à chaud et sous pression. Cette technique permet d'imprimer des images sur des objets élastomères tels des bottes. L'application de ce type d'images sur des surfaces en relief est possible à l'aide de formes d'impression reproduisant en creux le relief. Mais un tel procédé d'application ne convient pas pour le marquage sur des flancs de pneumatiques car le relief du lieu d'application ne peut pas être connu à l'avance.

Le document JP-A-53030501 décrit un dispositif de marquage sur le flanc d'un pneumatique d'une peinture disposée sur la surface extérieure d'une bande et appliquée sous pression avec un poinçon hémisphérique chauffé. Ce document ne résoud pas non plus le problème de l'invention qui est de pouvoir appliquer l'image jusqu'au fond du relief du flanc des pneumatiques en tout lieu d'application et ce quel que soit ce relief.

L'invention a pour objet une tête et un dispositif de marquage pour le transfert à froid, c'est à dire à température ambiante ou à chaud, et sous pression d'images sur le flanc d'un pneumatique.

On appelle "image" tout signe distinctif tel que pastille, lettre, indice... pouvant être appliqué sur le flanc d'un pneumatique.

La tête de marquage selon l'invention pour réaliser le transfert à froid ou à chaud et sous pression d'images sur le flanc d'un pneumatique est caractérisée en ce que le moyen d'application de l'image comprend une botte d'aiguilles indépendantes, libres de se déplacer les unes par rapport aux autres avec un léger frottement et à une température appropriée.

Selon une forme de réalisation, les aiguilles de cette tête de marquage sont faites de cordes à piano dressées et montées dans un fourreau à l'aide d'une graisse résistant à des températures supérieures à 100°C.

Le montage des aiguilles à l'aide d'une graisse leur permet de se déplacer quasi-librement les unes par rapport aux autres et ainsi d'appliquer l'image jusqu'au fond du relief du flanc des pneumatiques en tout lieu d'application et ce quel que soit ce relief tout en assurant le retour en bloc de la botte d'aiguilles à sa position initiale, après le transfert, par l'intermédiaire du fourreau.

Selon une autre caractéristique de cette tête de marquage, la botte d'aiguilles est actionnée par un piston par l'intermédiaire d'une pièce élastique.

La partie de la pièce élastique qui vient en contact avec les aiguilles a de préférence une géométrie de calotte sphérique. Cette géométrie lui permet de transmettre progressivement la pression fournie par le piston aux aiguilles en commençant par celles situées au centre de la botte puis en suivant des cercles concentriques jusqu'à celles situées contre le fourreau. En conséquence, lors du transfert, l'image est mise progressivement en contact intime avec la surface du flanc sans emprisonner d'air.

L'élastomère constituant la pièce élastique est suffisamment déformable à chaud et à froid pour transmettre la pression fournie par le piston aux aiguilles de façon telle qu'elles puissent s'adapter en tout lieu d'application aux différents reliefs des flancs de pneumatiques.

La tête de marquage peut s'insérer dans un dispositif automatique d'application d'images par transfert à froid ou à chaud et sous pression sur le flanc d'un pneumatique caractérisé en ce qu'il comprend :
a) une tête de marquage précédemment décrite,
b) une cassette d'alimentation et de réception de bandes-transfert,
c) un dispositif d'acheminement des bandes-transfert et d'évacuation des bandes support et protectrice desdites bandes-transfert,
d) un bâti assurant la liaison mécanique avec une machine de contrôle de pneumatiques et l'orientation appropriée de la tête de marquage par rapport au flanc du pneumatique,
e) une boîte de dérivation et de commande de l'avancement de la bande.

L'invention a également pour objet un procédé qui utilise des "images élastiques", c'est-à-dire des images réalisées en un matériau élastique capable de se déformer pour épouser la forme du relief du flanc du pneumatique lors de son transfert sous pression.

Ce procédé de mise en oeuvre d'un dispositif automatique de marquage pour le transfert à froid ou à chaud et sous pression d'images élastiques sur le flanc d'un pneumatique en sortie d'un test de contrôle est caractérisé par les étapes suivantes :
a) la position du dispositif de marquage est réglée au préalable et le moyen d'application porté à une température appropriée,
b) une image est mise en position d'attente de transfert,
c) la machine de contrôle effectue son cycle de test du pneumatique gonflé en rotation sur un volant et repère le lieu à marquer,
d) le pneumatique est immobilisé dans une position angulaire résultant de la mesure et appropriée pour le dispositif de marquage,
e) l'ensemble du dispositif de marquage s'approche du flanc du pneumatique,
f) la botte d'aiguilles du moyen d'application est poussée jusqu'au contact avec la bande-transfert et la surface du flanc du pneumatique de manière à opérer un transfert de chaleur entre ladite botte d'aiguilles et la bande-transfert et à appliquer progressivement sous pression suivant le galbe et le relief du flanc du pneumatique l'image élastique à partir de son centre puis selon des cercles concentriques jusqu'à ses bords,
g) le moyen d'application est ramené à sa position initiale.
h) l'ensemble du dispositif de marquage est ramené à sa position initiale.

Le procédé selon l'invention permet de réaliser un transfert d'images rapide ne nécessitant pas de temps de séchage tout en assurant une adhésion excellente et durable quels que soient le lieu d'application nécessaire sur le pneumatique et son relief.

Un mode particulier de réalisation de l'invention est décrit en se référant aux dessins annexés suivants :
- la figure 1 présente les axes de référence du dispositif automatique de marquage,
- la figure 2 est une vue de face du dispositif automatique de marquage,
- la figure 3 est une coupe de la tête de marquage selon le plan AA tel que représenté à la figure 2 et avec ur rabattement partiel,
- la figure 4 est une vue en coupe complète du dispositif selon le plan AA tel que représenté à la figure 2 et avec un rabattement partiel,
- la figure 5 représente une coupe d'une bande-transfert,
- la figure 6 est une vue de face d'une bande-transfert.

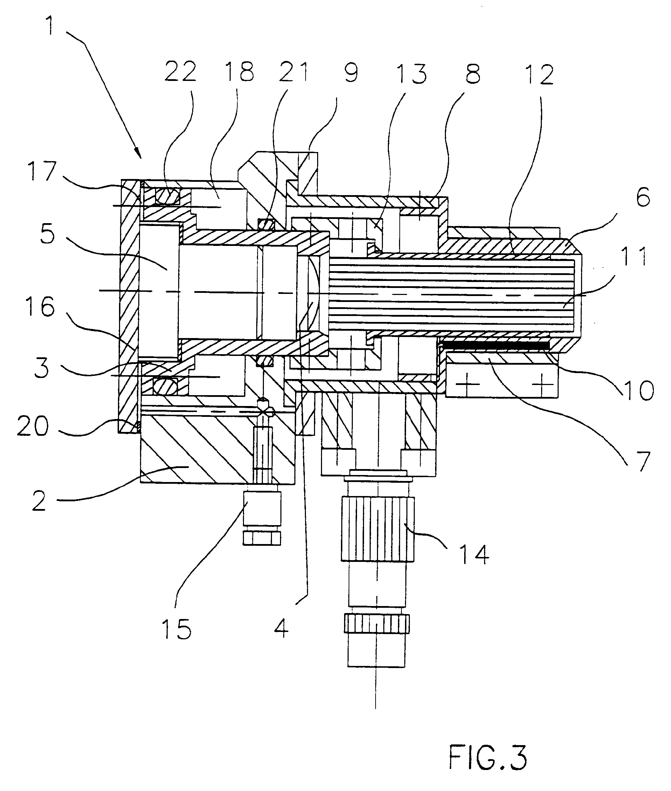

La tête de marquage 1 comprend trois parties (fig. 3) :
- Un corps principal 2 à l'intérieur duquel coulisse un piston pneumatique 3. Une pièce élastique 4 est disposée à la tête du piston. Cette pièce 4 a une forme cylindrique terminée par une calotte sphérique ; elle est constituée de caoutchouc silicone "RTV 1556" de la société "Rhône-Poulenc", France. La pièce 4 s'appuie sur la pièce 5 accouplée au piston par sa partie décolletée et mobile avec lui. L'étanchéité des chambres pneumatiques 17 et 18 est assurée par le couvercle 16 et le joint 20 pour l'une, la bague 21 pour l'autre et la bague 22 entre elles.
- Un corps de chauffe comprenant une pièce cylindrique 6 entourée par un collier chauffant 7 et reliée au corps principal 2 par une pièce isolante 8 immobilisée par la pièce 9. Une sonde de température 10 est insérée dans la pièce 6 pour assurer la régulation thermique de la tête.
- Un moyen d'application constitué par une botte 11 d'environ 500 aiguilles de diamètre 0.8 mm réalisées en cordes à piano dressées montée dans un fourreau 12 à l'aide d'une graisse résistante à des températures supérieures à 100°C de marque "Belleville" et commercialisée par la société "Graisse Belleville", France. Le fourreau 12 est raccordé à la tête du piston par la pièce isolante 13 et coulisse librement dans la pièce 6. Cette même pièce 6 assure la conduction thermique entre le fourreau 12 et le collier chauffant 7.

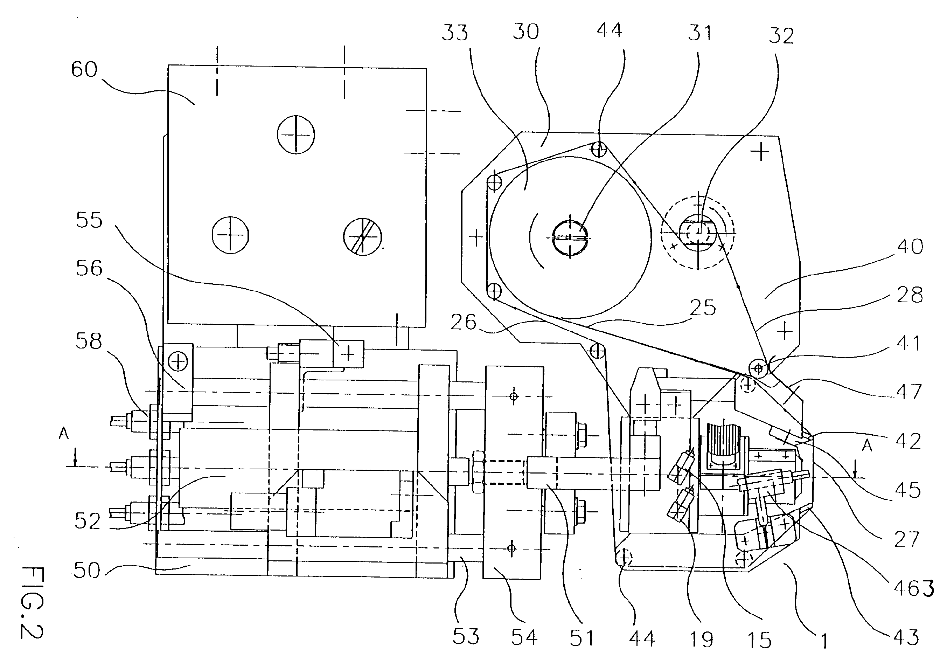

Le connecteur débrochable 14 assure la liaison électrique du collier chauffant et de la sonde. Les raccords pneumatiques du piston sont situés en 15 et 19 (fig.2).

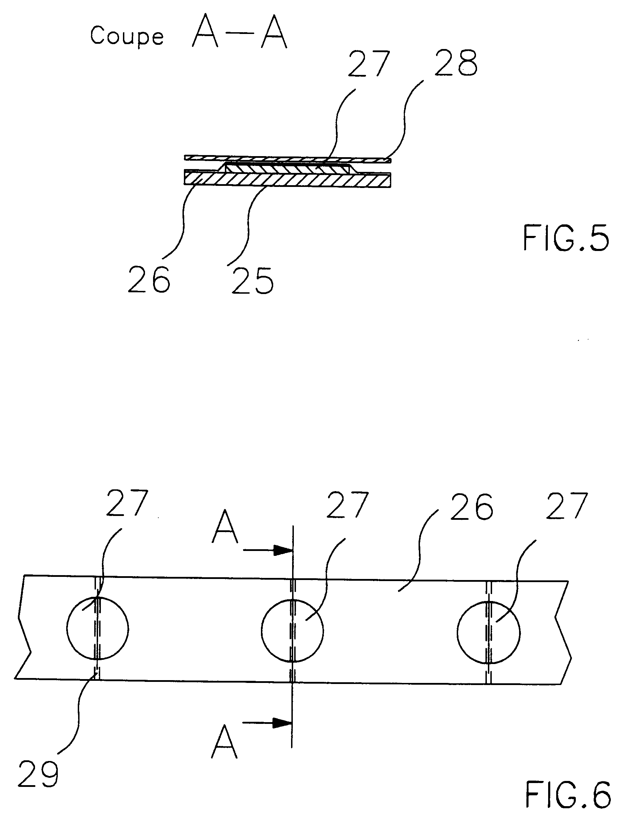

Une bande-transfert 25 connue en soi appropriée pour un transfert à chaud est représentée sur les figures 5 et 6. Celle-ci comprend : une bande support 26, les images 27 réalisées en un matériau élastique capable de se déformer lors de l'application pour épouser en tout lieu le relief des flancs du pneumatique et une bande protectrice 28. Les images 27 sont reliées à la bande support 26 par une couche de cire qui fond à chaud permettant ainsi un détachement aisé et complet de l'image lors du transfert à chaud. Les images comportent aussi une couche de pigments de couleurs variables si l'on souhaite appliquer des images visibles ou constituées d'azurants optiques sensibles aux rayons ultraviolets pour le cas d'un marquage invisible à l'oeil mais cependant aisément détectable sous un rayonnement de rayons ultraviolets. Le dos de la bande support comporte des repères 29 centrés par rapport aux images permettant leur positionnement précis lors du transfert.

Le procédé conforme à l'invention utilise avantageusement des bandes-transfert commercialisées par la société "BSB", France, qui sont transférables à chaud.

Le fonctionnement de la tête de marquage suit les étapes suivantes :
On chauffe les aiguilles 11 et on régule leur température à environ 150°C. dans le cas de l'utilisation d'une bande-transfert 25 "BSB". Puis, on envoie de l'air dans la chambre pneumatique 17 du corps principal 2, déplaçant le piston 3 de sa course et par suite, la tête de piston formée de la pièce élastique 4 vient pousser la botte d'aiguilles 11 et le fourreau 12 jusqu'au contact avec la bande transfert 25 et la surface du flanc du pneumatique de manière à opérer un échange de chaleur entre la botte d'aiguilles 11 et la bande-transfert 25 et à appliquer les aiguilles suivant le galbe et le relief du flanc du pneumatique et ainsi réaliser le transfert de l'image 27 de la bande sur le flanc en suivant les aspérités du relief du flanc. Après un temps prédéterminé, on envoie de l'air dans la chambre pneumatique 18 du piston faisant revenir en arrière le piston 3. La tête de piston n'entraîne pas immédiatement le fourreau 12 afin de séparer les aiguilles chaudes 11 de la pièce élastique 4 et assurer le refroidissement de celle-ci par des ouïes d'aération réalisées dans les pièces 8 et 13. Grâce à la collerette du fourreau 12, celui-ci est ensuite ramené en arrière, ainsi que les aiguilles 11 par son intermédiaire.

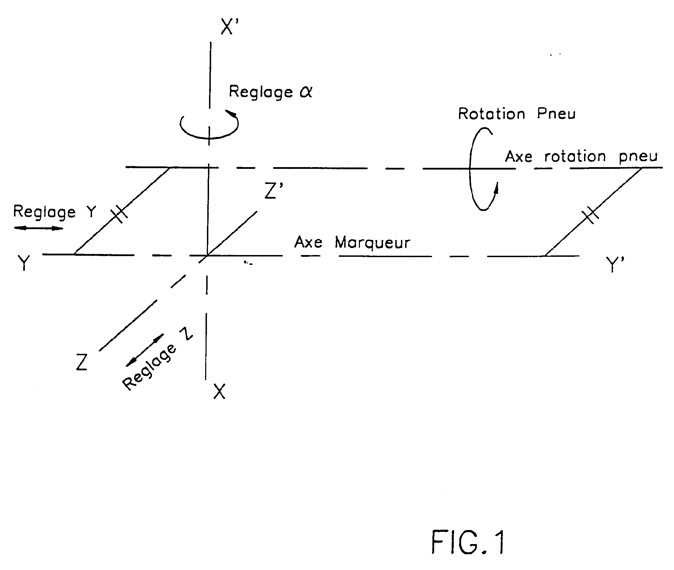

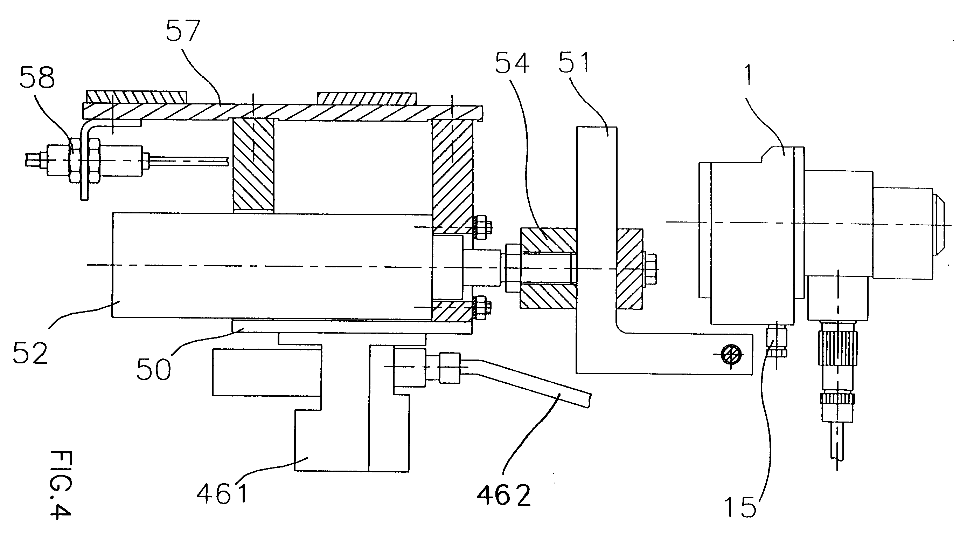

Le dispositif automatique de marquage des flancs est présenté sur les figures 2 et 4 et ses axes de référence sont précisés à la figure 1.

Outre la tête de marquage 1, il comprend une cassette d'alimentation 30 de bande-transfert 25, un dispositif 40 d'acheminement des bandes, un bâti 50 de liaison mécanique avec une machine de contrôle de pneumatique et de positionnement de la tête de marquage 1 et une boîte 60 de dérivation et de commande de l'avancement de la bande-transfert 25.

La cassette d'alimentation 30 de bande-transfert 25 comprend deux axes 31 et 32, le premier reçoit le mandrin de la bobine 33 avec la bande-transfert 25 et le second assure le rembobinage des deux bandes support 26 et protectrice 28 après le transfert des images 27. L'axe de réception 32 est accouplé à un moteur d'entraînement de la bande-transfert 25.

Le dispositif d'acheminement des bandes 40 assure le passage de la bande-transfert 25 par le galet 41, la séparation de la bande protectrice 28 et son stockage autour de l'axe 32. La bande-support 26 est ensuite amenée aux lèvres 42 et 43 qui viennent en contact avec le flanc du pneumatique, puis retourne à l'axe de rembobinage par les galets 44. Un dispositif 45 assure le refroidissement de l'image 27 devant la botte d'aiguilles hors transfert par une circulation d'air. Un dispositif optique détecte la présence des repères 29 sur la bande support 26 assurant ainsi le positionnement des images 27 par rapport à la tête de marquage 1 ainsi qu'une détection de fin de bande ou de rupture accidentelle de bande support 26. Ce dispositif se compose d'un capteur optique 461 fixé au bâti 50, d'une fibre optique 462 et d'un support 463 assurant le bon positionnement de l'extrémité de la fibre optique 462.

Enfin, un dispositif détecte automatiquement une rupture de la bande protectrice 28 par enregistrement de la conduction électrique entre le galet 41 et le ressort de pression 47.

Le bâti 50 assure la liaison mécanique entre la tête de marquage 1 et une machine de contrôle de pneumatique et permet de régler le positionnement de la tête par rapport au flanc du pneumatique.

L'axe du dispositif de marquage est situé dans un plan horizontal passant par l'axe de rotation du pneumatique contrôlé (fig. 1). La pièce 51 assure la liaison entre la tête de marquage 1 et le bâti 50. Cette liaison autorise une rotation autour de l'axe vertical X'X qui permet d'ajuster la perpendicularité de la tête de marquage par rapport au flanc du pneumatique, ainsi qu'un réglage radial de positionnement de la tête par rapport au flanc selon l'axe Z'Z. La came 56 permet un réglage de la distance entre la tête de marquage 1 et le pneumatique suivant l'axe Y'Y et ainsi de tenir compte de la dimension du pneumatique. Un vérin 52 avec les guides 53 et la pièce 54 assure le déplacement automatique de l'ensemble de la tête de marquage 1 pour se rapprocher et s'écarter du flanc du pneumatique pendant l'opération de transfert. Le contact 55 arrête le vérin en fin de course selon le réglage de la pièce 56. Le bâti est fixé sur la machine de contrôle de pneumatique par la pièce 57 qui reçoit aussi trois raccords pneumatiques 58 reliés par des tuyaux respectivement aux pièces 15 et 19 pour le piston 3 et au dispositif de refroidissement 45.

La boîte 60 de dérivation et de commande de l'avancement de la bande-transfert 25 est conventionnelle. Elle comporte en facade trois boutons poussoirs nécessaires au chargement d'une nouvelle bobine d'images transfert ainsi qu'un dispositif de contrôle manuel du cycle de marquage. Elle est reliée au dispositif de régulation et de commande de la machine de contrôle de pneumatique.

Le cycle de fonctionnement du dispositif automatique de marquage est le suivant :
La position du dispositif de marquage étant préalablement réglée en fonction de la dimension du pneumatique à marquer, une image 27 est mise en position d'attente de transfert à la fin du cycle de marquage précédent. La machine de contrôle de pneumatique effectue son cycle de test du pneumatique gonflé en rotation sur un volant et repère, en particulier, le lieu à marquer. A la fin du cycle de test, le pneumatique est immobilisé dans une position angulaire résultant de la mesure et appropriée pour le marqueur. L'ensemble du dispositif de marquage s'approche du flanc du pneumatique par l'action du vérin 52 jusqu'à une mise en appui léger des lèvres 42 et 43. Le cycle de fonctionnement de la tête de marquage 1 se déroule comme précédemment décrit. Puis, après un temps préréglé, le vérin 53 assure le retour du dispositif à sa position initiale. Enfin, une nouvelle image est mise en position d'attente pour le transfert suivant.

Cette invention est applicable au marquage de flancs de pneumatiques en sortie de tests de contrôles et particulièrement au repérage du maximum de variation de force radiale du pneumatique en sortie de contrôle d'uniformité.

## Revendications

1. Tête de marquage (1) pour le transfert à froid ou à chaud et sous pression d'images (27) sur le flanc d'un pneumatique caractérisée en ce que son moyen d'application comprend une botte (11) d'aiguilles indépendantes, libres de se déplacer les unes par rapport aux autres avec un léger frottement et à une température appropriée.

2. Tête de marquage (1) selon la revendication 1 caractérisée en ce que les aiguilles de son moyen d'application sont réalisées en cordes à piano dressées.

3. Tête de marquage (1) selon l'une quelconque des revendications 1 et 2 caractérisée en ce que les aiguilles de son moyen d'application sont montées dans un fourreau (12) à l'aide d'une graisse résistant à des températures supérieures à 100°C.

4. Tête de marquage (1) selon l'une quelconque des revendications 1 à 3 caractérisée en ce que la botte (11) d'aiguilles est actionnée par un piston (3) par l'intermédiaire d'une pièce élastique (4).

5. Tête de marquage (1) selon l'une quelconque des revendications 1 à 4 caractérisée en ce que l'extrémité de la pièce élastique (4) en contact avec les aiguilles pendant le transfert a une forme de calotte sphérique.

6. Dispositif automatique de marquage caractérisé en ce qu'il comprend :
a) une tête de marquage (1) selon l'une quelconque des revendications 1 à 5,
b) une cassette (30) d'alimentation et de réception de bandes-transfert (25),
c) un dispositif (40) d'acheminement des bandes-transfert (25) et d'évacuation des bandes support (26) et protectrice (28) desdites bandes-transfert (25),
d) un bâti (50) assurant la liaison mécanique avec une machine de contrôle de pneumatique et l'orientation appropriée de la tête de marquage (1) par rapport au flanc du pneumatique,
e) une boîte de dérivation et de commande (60) de l'avancement de la bande-transfert (25).

7. Procédé de mise en oeuvre d'un dispositif de marquage automatique, comme dans la revendication 6, pour le transfert à froid ou à chaud et sous pression d'images élastiques sur le flanc d'un pneumatique en sortie d'un test de contrôle, caractérisé par les étapes suivantes :
a) la position du dispositif de marquage est réglée au préalable et le moyen d'application porté à une température appropriée,
b) une image (27) est mise en position d'attente de transfert,
c) la machine de contrôle effectue son cycle de test du pneumatique gonflé en rotation sur un volant et repère le lieu à marquer,
d) le pneumatique est immobilisé dans une position angulaire résultant de la mesure et appropriée pour le dispositif de marquage,
e) l'ensemble du dispositif de marquage s'approche du flanc du pneumatique,
f) la botte (11) d'aiguilles du moyen d'application est poussée jusqu'au contact avec la bande-transfert (25) et la surface du flanc du pneumatique de manière à opérer un transfert de chaleur entre ladite botte (11) d'aiguille et la bande-transfert (25) et à appliquer progressivement sous pression suivant le galbe et le relief du flanc du pneumatique l'image (27) à partir de son centre puis selon des cercles concentriques jusqu'à ses bords,
g) le moyen d'application est ramené à sa position initiale.
h) l'ensemble du dispositif de marquage est ramené à sa position initiale.

## Patentansprüche

1. Markierkopf (1) zum Übertragen von Bildern (27) auf die Flanke eines Luftreifens in kaltem oder heißem Zustand und unter Druck,
**dadurch gekennzeichnet,** daß
sein Auftragungsmittel ein Bündel (11) von unabhängigen und mit geringer Reibung bei geeigneter Temperatur frei gegeneinander beweglichen Nadeln umfaßt.

2. Markierkopf (1) nach Anspruch 1,
dadurch gekennzeichnet, daß
die Nadeln seines Auftragungsmittels aus ausgerichteten Stahlsaiten gebildet sind.

3. Markierkopf (1) nach einem der Ansprüche 1 und 2,
dadurch gekennzeichnet, daß
die Nadeln seines Auftragungsmittels in einer Hülse (12) mit Hilfe einer gegen Temperaturen oberhalb 100 °C beständigen Schmiere montiert sind.

4. Markierkopf (1) nach einem der Ansprüche 1 bis 3,
dadurch gekennzeichnet, daß
das Bündel (11) von Nadeln durch einen Kolben (3) über ein elastisches Element (4) betätigt wird.

5. Markierkopf (1) nach einem der Ansprüche 1 bis 4,
dadurch gekennzeichnet, daß
das Ende des elastischen Elements (4), das die Nadeln während der Übertragung berührt, die Form einer sphärischen Kalotte hat.

6. Automatische Markiervorrichtung,
**gekennzeichnet durch:**
a) einen Markierkopf (1) nach einem der Ansprüche 1 bis 5,
b) eine Kassette (30) zur Versorgung mit und zur Aufnahme von Übertragungsbändern (25),
c) eine Vorrichtung (40) zum Führen der Übertragungsbänder (25) und zum Abführen von Trägerband (26) und Schutzband (28) der Übertragungsbänder (25),
d) einen Rahmen (50), der die mechanische Verbindung mit einer Reifenkontrollmaschine und die geeignete Orientierung des Markierkopfs (1) bezogen auf die Reifenflanke sicherstellt;
e) eine Einheit (60) zum Umleiten und Steuern der Vorwärtsbewegung des Übertragungsbandes (25).

7. Verfahren zur Anwendung einer automatischen Markiervorrichtung nach Anspruch 6 zum Übertragen, in kaltem oder heißem Zustand und unter Druck, von elastischen Bildern auf die Flanke eines Luftreifens am Ausgang einer Kontrolluntersuchung,
**gekennzeichnet durch**
folgende Schritte:
a) die Position der Markiervorrichtung wird vorab geregelt und das Auftragungsmittel auf eine geeignete Temperatur gebracht,
b) ein Bild (27) wird in Warteposition für das Übertragen gebracht,
c) die Kontrollmaschine führt ihren Untersuchungszyklus am auf einem Schwungrad rotierenden, aufgepumpten Reifen durch und lokalisiert die zu markierende Stelle,
d) der Reifen wird in einer Winkelposition angehalten, die sich aus der Messung ergibt und für die Markiervorrichtung geeignet ist,
e) die gesamte Markiervorrichtung nähert sich der Flanke des Reifens,
f) das Bündel (11) von Nadeln des Auftragungsmittels wird bis in Berührung mit dem Übertragungsband (25) und der Oberfläche der Flanke des Reifens geschoben, um eine Wärmeübertragung zwischen dem Bündel (11) von Nadeln und dem Übertragungsband (25) zu bewirken und fortschreitend unter Druck entsprechend der Wölbung und dem Relief der Flanke des Reifens das Bild (27) ausgehend von seiner Mitte in konzentrischen Kreisen bis zu seinen Rändern aufzutragen,
g) das Auftragungsmittel wird in seine Ursprungsposition zurückgebracht,
h) die gesamte Markiervorrichtung wird in ihre Ursprungsposition zurückgebracht.

## Claims

1. A marking head (1) for the cold or hot transfer under pressure of images (27) to the sidewall of a tyre, characterised in that the means of application thereof comprises a cluster (11) of independent needles which are free to move with respect to each other with a slight friction and at a suitable temperature.

2. A marking head (1) according to Claim 1, characterised in that the needles of the application means thereof are made of straightened steel strings.

3. A marking head (1) according to any one of Claims 1 and 2, characterised in that the needles of the application means thereof are mounted in a sleeve (12) with the aid of a grease which is resistant to temperatures of above 100°C.

4. A marking head (1) according to any one of Claims 1 to 3, characterised in that the cluster (11) of needles is actuated by a piston (3) by means of an elastic element (4).

5. A marking head (1) according to any one of Claims 1 to 4, characterised in that the end of the elastic element (4) in contact with the needles during the transfer is in the shape of a spherical cap.

6. An automatic marking device, characterised in that it comprises:
a) a marking head (1) according to any one of Claims 1 to 5,
b) a feed and reception cassette (30) for transfer strips (25),
c) a device (40) for routing the transfer strips (25) and removing the backing (26) and protective (28) strips of said transfer strips (25),
d) a supporting structure (50) ensuring the mechanical connection with a tyre checking machine and the appropriate orientation of the marking head (1) with respect to the sidewall of the tyre,
e) a junction and control box (60) for the feed of the transfer strip (25).

7. A method for using an automatic marking device as in Claim 6 for the cold or hot transfer under pressure of elastic images to the sidewall of a tyre upon emerging from a checking test, characterised by the following steps:
a) the position of the marking device is controlled beforehand and the means of application is brought to an appropriate temperature,
b) an image (27) is placed in the transfer-awaiting position,
c) the checking machine effects its test cycle for the inflated tyre rotating on a test drum and locates the point to be marked,
d) the tyre is immobilised in an angular position resulting from the measurement and appropriate for the marking device,
e) the entire marking device approaches the sidewall of the tyre,
f) the cluster (11) of needles of the application means is pushed into contact with the transfer strip (25) and the surface of the sidewall of the tyre so as to be able to perform a heat transfer between said cluster (11) of needles and the transfer strip (25) and to apply progressively under pressure according to the camber and the relief of the sidewall of the tyre the image (27) starting from its centre and then in concentric circles as far as its edges,
g) the application means is brought back into its initial position,
h) the entire marking device is brought back into its initial position.
